Europäisches Patentamt

European Patent Office

Office européen des brevets

(11) Veröffentlichungsnummer: **0 267 380**
A1

(12) **EUROPÄISCHE PATENTANMELDUNG**

(21) Anmeldenummer: 87112536.5

(22) Anmeldetag: 28.08.87

(51) Int. Cl.⁴: **G02B 6/28** , G02B 6/34

(30) Priorität: 11.10.86 DE 3634707

(43) Veröffentlichungstag der Anmeldung:
18.05.88 Patentblatt 88/20

(84) Benannte Vertragsstaaten:
DE FR GB IT

(71) Anmelder: **ANT Nachrichtentechnik GmbH**
**Gerberstrasse 33**
**D-7150 Backnang(DE)**

(72) Erfinder: **Kuke, Albrecht, Dr.rer.nat.**
**Nelkenweg 2**
**D-7159 Auenwald(DE)**
Erfinder: **Hauer, Heiner, Dipl.-Ing.**
**Frühlingshalde 1**
**D-7012 Fellbach(DE)**

(54) Optischer Multiplexer/Demultiplexer.

(57) Bei einem optischen Multiplexer/Demultiplexer, bestehend aus einem Kollimator (K), der mindestens eine mit wellenlängenselektiven Mitteln belegte ebene Fläche aufweist, ist der Kollimator (K) als Kugel ausgebildet, die aus mindestens zwei Kugelsektoren zusammengesetzt ist, und jede zwischen jeweils zwei Kugelsektoren befindliche Trennebene (T1, T2, T3) ist mit einer Reflexionsfilterschicht (F1, F2, F3) belegt, die darauf auftreffendes Licht (S0 ... S7) in Abhängigkeit der Wellenlänge entweder reflektiert oder durchläßt.

FIG. 1

FIG.2

EP 0 267 380 A1

## Optischer Multiplexer/Demultiplexer

Die vorliegende Erfindung betrifft einen optischen Multiplexer/Demultiplexer, bestehend aus einem Kollimator, der mindestens eine mit wellenlängenselektiven Mitteln belegte ebene Fläche aufweist.

Ein derartiger Multiplexer/Demultiplexer ist aus der EP-A-0 173 930 bekannt. Er ist als halbkugelförmiger Kollimator realisiert, auf dessen ebene Schnittfläche ein Reflexionsgitter aufgebracht ist. An einem solchen Reflexionsgitter werden darauf auftreffende Lichtstrahlen wellenlängenabhängig unter verschiedenen Winkeln reflektiert. So vereint im Multiplexbetrieb das Reflexionsgitter mehrere unter verschiedenen Winkeln auftreffende Lichtstrahlen unterschiedlicher Wellenlängen zu einem einzigen Lichtstrahl mit Anteilen aller Wellenlängen, bzw. im dazu reziproken Demultiplexbetrieb wird ein Lichtstrahl mit verschiedenen Wellenlängenanteilen am Reflexionsgitter in einzelne nach Wellenlängen getrennt Lichtstrahlen aufgespalten.

Der Erfindung liegt die Aufgabe zugrunde, einen optischen Multiplexer/Demultiplexer der eingangs genannte Art anzugeben, der eine kompakte, kleinvolumige Bauform hat und die Aufspaltung bzw. Vereinigung einer Vielzahl von Lichtanteilen verschiedener Wellenlängen ermöglicht.

Diese Aufgabe wird durch die Merkmale des Patentanspruch 1 gelöst.

Zweckmäßige Ausführungen der Erfindung gehen aus den Unteransprüchen hervor.

An Hand eines in der Zeichnung dargestellten Ausführungsbeispiels wird nun die Erfindung näher erläutert. In der Zeichnung zeigt

Fig. 1 eine perspektivische Darstellung eines drei Trennebenen aufweisenden kugelförmigen Kollimators,

Fig. 2 eine Sicht in Richtung A,

Fig. 3 eine Sicht in Richtung B und

Fig. 4 eine Sicht in Richtung C auf den Kollimator.

Da Multiplexer und Demultiplexer reziproke Bauelemente sind, also ein Multiplexer durch Vertauschen der Signaleingänge und -ausgänge als Demultiplexer betrieben werden kann, wird die nachfolgend beschriebene Anordnung z.B. in ihrer Funktion als Demultiplexer betrachtet, weshalb weiterhin nur noch von einem Demultiplexer die Rede sein wird.

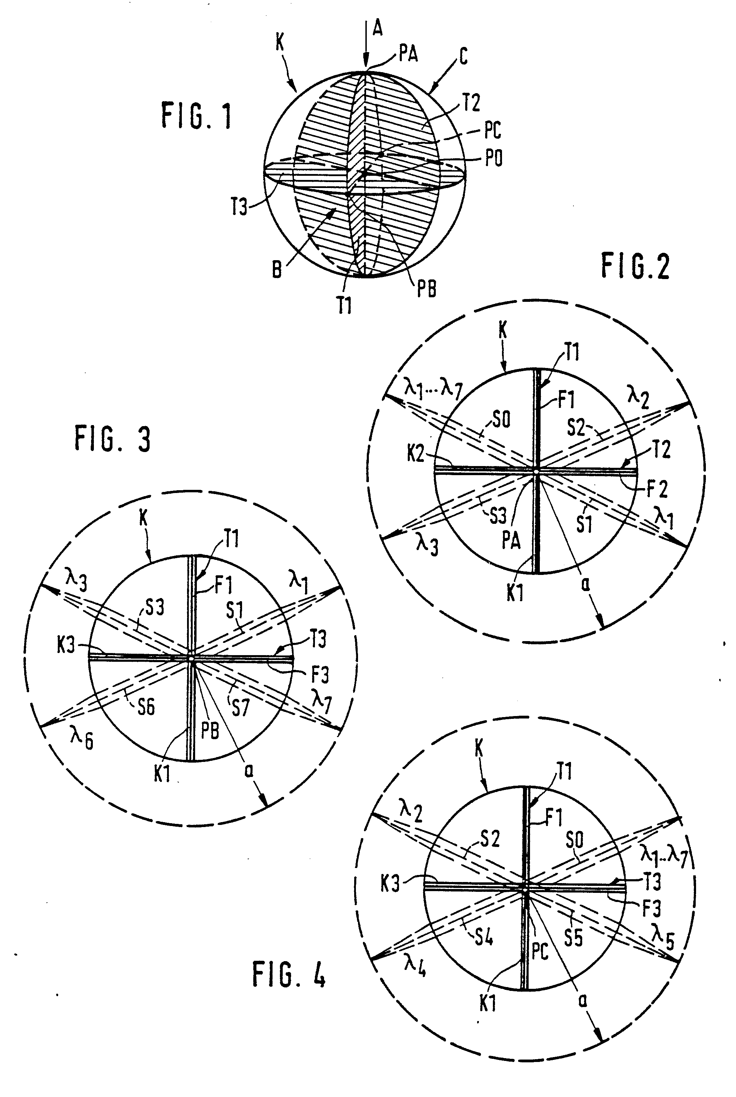

Wie die Fig. 1 zeigt, besteht der Demultiplexer aus einem kugelförmigen optischen Kollimator K. Dabei ist die Kugel K aus acht gleichen Kugelsektoren zusammengesetzt, die in drei senkrecht zueinander liegenden, durch den Kugelmittelpunkt PO verlaufenden Trennebenen T1, T2 und T3 (-schraffiert gezeichnet) miteinander verbunden sind.

Eine Sicht A auf den Schnittpunkt PA der beiden Trennebenen T1 und T2 ist in der Fig. 2, eine Sicht B auf den Schnittpunkt PB der beiden Trennebenen T1 und T3 ist in der Fig. 3 und eine Sicht C auf den Schnittpunkt PC der beiden Trennebenen T1 und T3 ist in Fig. 4 dargestellt. Diese drei Fig. 2, 3 und 4 sollen die Funktionsweise des Demodulators verdeutlichen.

Wie den in Fig. 2, 3 und 4 gezeigten Kugelansichten zu entnehmen ist, sind die Trennebenen T1, T2, T3 zwischen den Kugelsektoren mit Reflexionsfilterschichten F1, F2, F3 belegt. Dabei ist in jeder Trennebene T1, T2, T3 die Reflexionsfilterschicht F1, F2, F3 jeweils auf die ebenen Flächen der Kugelsektoren, die auf der einen Seite der Trennebene liegen, haftend aufgebracht und die auf der gegenüberliegenden Seite dieser Trennebene liegenden Kugelsektoren sind mittels eines auf der Reflexionsfilterschicht befindlichen optisch durchsichtigen Kittes K1, K2, K3 mit den anderen von der Reflexionsfilterschicht belegten Kugelsektoren verbunden. Zur Vermeidung von Fresnelreflexionen an den Trennebenen T1, T2 und T3 sollte der Brechungsindex des optisch durchsichtigen Kittes K1, K2, K3 etwa gleich dem Brechungsindex der Kugel K sein.

Die in den Fig. 2, 3 und 4 strichliert eingezeichneten Strahlengänge S0 ... S7 verdeutlichen, daß sich innerhalb des kugelförmigen Kollimators K das Licht in parallelen Strahlenbündeln ausbreitet, und jedes Parallelstrahlenbündel außerhalb des Kollimators in einem Abstand a von der Kollimatormitte auf einen Punkt fokussiert wird. Es existiert somit eine konzentrisch zum Kollimator K liegende fiktive Kugel mit dem Radius a, auf deren Oberfläche sämtliche Fokussionspunkte für alle möglichen in den Kollimator eintretenden oder aus ihm austretenden Strahlengänge lokalisiert sind. In diesen Fokussionspunkten sind zweckmäßigerweise alle die Licht in den Kollimator K einkoppelnden bzw. auskoppelnden optischen Elemente, seien es Lichtwellenleiter, Sende-oder Empfangselemente, mit ihren Lichteintritts-oder -austrittsflächen anzuordnen.

Bei dem in der Zeichnung dargestellten Ausführungsbeispiel seien die Reflexionsfilterschichten F1, F2, F3 als Kantenfilter oder als Bandpaßfilter derart ausgeführt, daß von einem in die Kugel K eintretenden, auf deren Mittelpunkt PO ge richteten Lichtstrahl S0 mit Lichtanteilen der Wellenlängen $\lambda_1 ... \lambda_7$ der Teilstrahl S1 der Wellenlänge $\lambda_1$ an dem Filter F3 reflektiert wird und die Filter F1, F2 durchtritt, der Teilstrahl S2 der Wellenlänge $\lambda_2$ an den Filtern F2, F3 reflektiert wird und das Filter F1 durchtritt, der Teilstrahl S3 der Wellenlänge $\lambda_3$ an den Filtern F1, F3 reflektiert wird und das Filter F2 durchtritt, der Teilstrahl S4 der Wellenlänge $\lambda_4$ am Filter F2 reflektiert wird und die Filter F1, F2 durchtritt, der Teilstrahl S5 mit der Wellenlänge $\lambda_5$ am Filter F2 reflektiert wird und die Filter F1, F3 durchtritt, der Teilstrahl S6 mit der Wellenlänge $\lambda_6$ am Filter F1 reflektiert wird und die Filter F2, F3 durchtritt und der Teilstrahl S7 mit der Wellenlänge $\lambda_7$ sämtliche Filter F1, F2, F3 durchtritt.

Natürlich sind bei entsprechender Wahl der Reflexionsfilter andere Aufteilungen von Teilstrahlen verschiedener Wellenlängen möglich. Auch kann ein Multiplexer/Demultiplexer für die Zusammenfassung oder Aufteilung weniger Teilstrahlen durch einen kugelförmigen Kollimatior realisiert werden, der nur ein oder zwei mit Reflexionsfilterschichten versehene Trennebenen aufweist.

## Ansprüche

1. Optischer Multiplexer/Demultiplexer, bestehend aus einem Kollimator, der mindestens eine mit wellenlängenselektiven Mitteln belegte ebene Fläche aufweist, dadurch gekennzeichnet, daß der Kollimator (K) als Kugel ausgebildet ist, die aus mindestens zwei Kugelsektoren zusammengesetzt ist. daß jede zwischen jeweils zwei Kugelsektoren befindliche Trennebene (T1, T2, T3) mit einer Reflexionsfilterschicht (F1, F2, F3) belegt ist, die darauf auftreffendes Licht (S0 ... S7) in Abhängigkeit der Wellenlänge entweder reflektiert oder durchläßt.

2. Optischer Multiplexer/Demultiplexer nach Anspruch 1, dadurch gekennzeichnet, daß jeder in den Kollimator (K) eingekoppelte Lichtstrahl (S0) auf den Kugelmittelpunkt gerichtet ist.

3. Optischer Multiplexer/Demultiplexer nach Anspruch 1 oder 2, dadurch gekennzeichnet, daß, falls mehrere Trennebenen (T1, T2, T3) im Kollimator (K) vorhanden sind, diese alle senkrecht zueinander liegen.

4. Optischer Multiplexer/Demultiplexer nach Anspruch 1, dadurch gekennzeichnet, daß die Reflexionsfilterschichten (F1, F2, F3) als auf verschiedene Wellenlängen abgestimmte Kantenfilter ausgeführt sind.

5. Optischer Multiplexer/Demultiplexer nach Anspruch 1, dadurch gekennzeichnet, daß die Reflexionsfilterschichten (F1, F2, F3) als auf verschiedene Wellenlängen abgestimmte Bandpässe ausgeführt sind.

6. Optischer Multiplexer/Demultiplexer nach Anspruch 1, dadurch gekennzeichnet, daß die Kugelsektoren mittels eines auf die Reflexionsfilterschicht (F1, F2, F3) aufgetragenen optisch durchsichtigen Kittes (K1, K2, K3) miteinander verbunden sind und daß der Kitt einen Brechungsindex hat, der ungefähr gleich dem der Kugelsegmente ist.

FIG. 1

FIG. 2

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| X | DE-A-3 324 611 (STANDARD ELEKTRIK LORENZ) <br> * Ansprüche 1, 2, 4; Seite 6, Absatz 1; Seite 7, Absatz 5; Abbildungen 1, 3 * <br> --- | 1,2 | G 02 B 6/28 <br> G 02 B 6/34 |
| A | EP-A-0 146 957 (INTERNATONAL STANDARD ELECTRI CORP.) <br> * Zusammenfassung; Seite 6, Zeilen 22-29; Ansprüche 2, 3 * <br> --- | 4,5 | |
| A | EP-A-0 158 967 (STANDARD ELEKTRIK LORENZ) <br> * Zusammenfassung; Abbildung 1; Seite 8, Zeilen 22-25 * <br> --- | 6 | |
| A,D | EP-A-0 173 930 (STANDARD ELEKTRIK LORENZ) <br> * Zusammenfassung; Abbildung 1 * <br> ----- | 1 | |
| | | | **RECHERCHIERTE SACHGEBIETE (Int. Cl.3)** <br><br> G 02 B 6/00 <br> G 02 B 7/00 |

Der vorliegende Recherchenbericht wurde für alle Patentansprüche erstellt

| Recherchenort | Abschlußdatum der Recherche | Prüfer |
|---|---|---|
| BERLIN | 04-01-1988 | HYLLA W.A. |